# EUROPÄISCHE PATENTSCHRIFT

(11) **EP 3 567 171 B1**
(45) Veröffentlichungstag und Bekanntmachung des Hinweises auf die Patenterteilung: **05.07.2023**
(21) Anmeldenummer: 19173875.6
(22) Anmeldetag: 10.05.2019
(51) Int. Cl.: E03F 3/06, E03F 9/00, E03F 7/12, F16L 55/162, F16L 55/18

(54) **KANALBEARBEITUNGSVORRICHTUNG**
CHANNEL PROCESSING DEVICE
DISPOSITIF DE TRAITEMENT DU CANAL

(30) Priorität: 11.05.2018 DE 202018102657 U
(43) Veröffentlichungstag der Anmeldung: 13.11.2019
(73) Patentinhaber: Zimmer, Werner, 66557 Illingen (DE)
(72) Erfinder: Zimmer, Werner, 66557 Illingen (DE)
(74) Vertreter: Patentanwälte Bernhardt / Wolff Partnerschaft mbB

(56) Entgegenhaltungen:
- AT-B- 396 270
- DE-A1- 1 759 476
- DE-A1- 10 304 934
- DE-A1- 19 719 969
- DE-A1-102015 122 407

## Beschreibung

Die Erfindung betrifft Kanalbearbeitungsvorrichtung nach dem Oberbegriff des Anspruchs 1.

Durch Benutzung bekannt sind Kanalbearbeitungsvorrichtungen zur Verwendung innerhalb eines zu sanierenden Kanals. Bei diesen Kanalbearbeitungsvorrichtungen handelt es sich oftmals um ferngesteuerte Roboter, welche gegenüber dem zu sanierenden Kanalabschnitt positioniert werden und anschließend die zu sanierende Stelle reparieren, beispielsweise durch Aufbringung eines Füllstoffs. Hierzu weisen derartige Kanalbearbeitungsvorrichtungen einen Grundkörper und eine an dem Grundkörper angeordnete Bearbeitungseinrichtung, beispielsweise mit einer Auftragsvorrichtung für den Füllstoff, auf.

Aus DE 10304934 A1 geht eine Kanalbearbeitungsvorrichtung zur Anordnung innerhalb eines Kanals mit einem Grundkörper und einer an dem Grundkörper angeordneten Bearbeitungseinrichtung zur Bearbeitung eines Kanalabschnitts hervor. Die Bearbeitungseinrichtung weist eine Halteeinrichtung in Form eines aufblasbaren Gummiformteils zum Andrücken einer harzgetränkten Hutmanschette auf. Das Gummiformteil ist auf einer Tragplatte montiert, welche mit einer Drehachse eines Grundkörpers der Kanalbearbeitungsvorrichtung über mehrere motorisch drehbare Haltearme verbunden ist, um die Tragplatte zu schwenken und zur Kanalwand hin zu verfahren. Hierdurch kann die harzgetränkte Hutmanschette gegen eine Innenwand eines Kanals angedrückt werden.

Aufgabe der Erfindung ist es, eine Kanalbearbeitungsvorrichtung zu schaffen, welche eine besonders präzise Positionierung einer Bearbeitungseinrichtung gegenüber einem zu bearbeitenden Kanalabschnitts und eine besonders zuverlässige Bearbeitung/Reparatur des Kanalabschnitts ermöglicht.

Diese Aufgabe wird dadurch gelöst, dass die Bearbeitungseinrichtung mehrere gelenkig miteinander verbundene Halteplatten umfasst, die mittels Führungen an dem Grundkörper um eine Drehachse des Grundkörpers drehbar gelagert sind. Die Halteplatten ermöglichen ein großflächiges Andrücken der Abdeckung, insbesondere eines Füllstoffs oder einer Schweißplatte aus PP und/oder PE, an die zu bearbeitende Stelle des Kanals.

Die Bearbeitungseinrichtung weist mindestens eine Halteeinrichtung für zumindest eine zur Anbringung an der Kanalinnenseite vorgesehene, insbesondere flache, Abdeckung zur Anbringung an einem Kanalabschnitt auf und die Halteeinrichtung ist von dem Grundkörper nach außen verfahrbar ausgebildet, um ein Andrücken der Halteeinrichtung mit der Abdeckung gegen einen Innenwand des Kanals zu ermöglichen. Hierzu kann die Halteeinrichtung beispielsweise mindestens einen elektrischen, hydraulischen oder pneumatischen Aktuator als Andrückeinrichtung umfassen, welche sich an dem Grundkörper bzw. der Bearbeitungseinrichtung abstützt und die Halteeinrichtung mit der Abdeckung von dem Grundköper nach außen in Richtung der Kanalinnenseite beaufschlagt. Werden mehrere Aktuatoren vorgesehen, können Sensoren vorgesehen sein, um die Anpressdrücke durch die einzelnen Aktuatoren zu erfassen und ggf. die Möglichkeit zu schaffen, die Anpressdrücke aneinander anzugleichen. Alternativ kann die Andrückeinrichtung ein pneumatisch oder hydraulisch aufblasbares Kissen umfassen, um die Halteeinrichtung mit der Abdeckung gleichmäßig gegen die Innenseite des Kanals zu beaufschlagen.

Die Abdeckung kann als Platte, insbesondere aus einem thermoplastischen Material, ausgebildet sein, welches vorzugsweise durch Erhitzen und Anschmelzen mit dem zu sanierenden Kanalabschnitts stoffschlüssig verbindbar ist. Zum Erhitzen einer thermoplastischen Abdeckung können Heizdrähte in der Abdeckung vorgesehen sein, welche sich bei Anlegen einer elektrischen Spannung erhitzen. Alternativ kann die Abdeckung beispielsweise aus einem aushärtbaren Harz, beispielsweise einem Epoxid- oder Polyesterharz, gebildet sein. Zur Ausbildung der Abdeckung wird insbesondere auf die DE 10 2015 122 407 A1 Bezug genommen.

Die Form der Abdeckung kann an den zu sanierenden Kanalabschnitt angepasst sein. Vorzugsweise ist die Abdeckung als ringförmige Scheibe mit einem Durchgangsloch vorgesehen, um den Übergang von einem Kanal auf ein Abzweigrohr abzudichten zu können.

In einer bevorzugten Ausführungsform der Erfindung weist die Halteeinrichtung ein Magazin zur Aufnahme mehrerer der, insbesondere flachen, Abdeckungen auf. In dem Magazin können die einzelnen Abdeckungen stoßweise übereinander gestapelt sein, sodass nach Aufbringen einer ersten Abdeckung unmittelbar eine weitere Abdeckung für die Reparatur eines weiteren Kanalabschnitts zur Verfügung steht. Zwischen den Abdeckungen kann dabei ein Klebstoff und/oder ein Trennmittel, insbesondere eine Folie, beispielsweise eine Teflonfolie, vorgesehen sein, welcher bzw. welches ein leichtes Lösen der einzelnen Abdeckungen voneinander ermöglicht. Zusätzlich oder alternativ kann vorgesehen sein, dass die Halteeinrichtung mindestens ein Greifelement umfasst, welches die jeweils äußerste Abdeckung zur Anbringung an dem Kanal freigibt.

Zweckmäßigerweise umfasst die Kanalbearbeitungsvorrichtung die Abdeckung bzw. die Abdeckungen.

In einer Ausgestaltung der Erfindung ist die Bearbeitungseinrichtung, vorzugsweise an zwei einander gegenüberliegenden Seiten mittels Führungen, beweglich an dem Grundkörper gelagert.

In einer besonders bevorzugten Ausführungsform der Erfindung ist die Bearbeitungseinrichtung gelagert derart, dass sie sich entlang einer Innenseite eines zu bearbeitenden Kanals bewegen lässt. Da die mit der Vorrichtung zu bearbeitende Kanäle, insbesondere Kanalrohre, normalerweise eine standardisierte, im Querschnitt kreisförmige oder eiprofilförmige Formen aufweisen, die ggf. standardisierte Abmessungen wie Durchmesser o. dgl. aufweisen, lässt sich die Lagerung der Bearbeitungseinrichtung an dem Grundkörper daran angepasst vorsehen. Vorzugsweise ist die Lagerung vorgesehen derart, dass sich die Bearbeitungseinrichtung, vorzugsweise zumindest abschnittsweise, entlang einer Kreisbahn, einer Ellipsenbahn oder entlang einer Bahn, die einer Eiprofilform entspricht, bewegen lässt.

Die Drehachse des Grundkörpers ist in dem Grundkörper zweckmäßigerweise vorgesehen derart, dass sie sich bei bestimmungsgemäßer Anordnung der Vorrichtung in einem zu bearbeitenden Kanal, insbesondere Kanalrohr, parallel oder zumindest im Wesentlichen parallel zu einer Längsrichtung des Kanals bzw. des Kanalrohrs anordnen lässt.

Mittels der Führungen kann die Bearbeitungseinrichtung in Umfangsrichtung der Kanalbearbeitungsvorrichtung besonders präzise positioniert werden. Durch die beidseitige Lagerung der Bearbeitungseinrichtung wird eine stabile Abstützung erreicht. Dies ist insbesondere dann vorteilhaft, wenn mittels der Halteeinrichtung beispielsweise ein Füllmittel oder eine Schweißplatte aus PP oder PE (beispielsweise ein Elektroschweiß-Sattel) mit einem hohen Druck auf die zu bearbeitende Stelle aufgebracht werden muss, um eine sichere, schweißbare und dichte Verbindung mit dem zu bearbeitenden Kanalabschnitt einzugehen.

Für eine besonders flexible Positionierung der Bearbeitungseinrichtung gegenüber dem zu bearbeitenden Kanalabschnitt kann vorgesehen sein, dass die Bearbeitungseinrichtung in Umfangsrichtung der Kanalbearbeitungsvorrichtung über einen Winkelbereich von mindestens 180°, bevorzugt mindestens 270°, um die Drehachse bewegbar ist. Hierdurch kann die Bearbeitungseinrichtung in Umfangsrichtung frei bewegt werden und es ist möglich, die Bearbeitungseinrichtung und damit die Halteeinrichtung mit der mindestens einen Abdeckung unabhängig von der Lage der zu bearbeitenden Stelle am Umfang der Kanalinnenseite exakt zu positionieren.

Bevorzugt kann die Bearbeitungseinrichtung mit der Drehachse über mindestens einen radial von der Drehachse vorstehenden Haltearm verbunden sein, so dass bei einer motorisch angetriebenen Drehung des Haltearms um die Drehachse die Bearbeitungseinrichtung bewegbar ist.

Besonders bevorzugt kann die Länge des Haltearms veränderbar sein, um eine Anpassung an von der Kreisform abweichende Kanalquerschnitte zu ermöglichen. Die Länge des Haltearms kann frei verstellbar ausgebildet sein, beispielsweise in Form einer Längsführung, oder auch ansteuerbar, beispielsweise in Form eines Linearaktuators. Der Haltearm kann teleskopartig ausgebildet sein.

Für eine stabile Abstützung der Bearbeitungseinrichtung kann der Grundkörper zwei voneinander beabstandete Träger mit im wesentlichen identischer Außenkontur umfassen, wobei die Außenkontur an die Innenkontur des zu bearbeitenden Kanals im Querschnitt angepasst sein kann. Bevorzugt kann die Außenkontur der Träger dabei kreisförmig oder Eiprofil-förmig ausgebildet sein. Zudem können an dem Grundkörper, insbesondere den Trägern, mehrere, bevorzugt in Umfangsrichtung versetzt zueinander angeordnete, Abstützeinrichtungen zum Verfahren und/oder Fixieren der Kanalbearbeitungsvorrichtung in dem zu bearbeitenden Kanal vorgesehen sein. Die Abstützeinrichtungen können dabei in Radialrichtung verstellbar gegenüber dem Grundkörper ausgebildet sein, um ein Anstellen an die Innenseite des zu bearbeitenden Kanals und ein Festklemmen der Kanalbearbeitungsvorrichtung zu ermöglichen.

Für eine besonders stabile Abstützung der Bearbeitungseinrichtung kann diese zwischen den Trägern angeordnet und an den zwei gegenüberliegenden Seiten in Führungen an den Trägern verschiebbar gelagert sein. Die Führungen können beispielsweise als Nuten und/oder Schienen in dem Grundkörper, insbesondere den Trägern, ausgebildet und insbesondere auf Kunststoff gefertigt sein.

Um ein besonders präzises Verfahren der Bearbeitungseinrichtung und damit der Halteeinrichtung entlang der Innenseite des zu bearbeitenden Kanals zu ermöglichen, können die Führungen einen Verlauf entsprechend der Innengeometrie des zu bearbeitenden Kanals im Querschnitt aufweisen. insbesondere kann der Verlauf zumindest einem Teil einer Kreisform oder einer Eiprofil-Form entsprechen. Wird die Kanalbearbeitungsvorrichtung beispielsweise für die Verwendung in einem Kanal mit einer Eiprofil-Form im Querschnitt ausgebildet, so weisen die Führungen einen entsprechenden Verlauf in Eiprofil-Form auf. Bei einem Verfahren der Bearbeitungseinrichtung entlang der Führungen wird dabei ein exakt definierter Abstand zwischen der Bearbeitungseinrichtung und der Innenseite des Kanals eingehalten, was eine präzise Bearbeitung des zu bearbeitenden Kanalabschnitts ermöglicht. Wird die Kanalbearbeitungsvorrichtung für eine Verwendung in einem Kanal mit einem kreisförmigen Querschnitt ausgebildet, so verlaufen die Führungen entsprechend kreisförmig.

Auf den Halteplatten kann die Andrückeinrichtung zusammen mit der Halteeinrichtung angeordnet sein. Jede Halteplatte kann dabei an zwei gegenüberliegenden Enden in den Führungen beweglich gelagert sein. Werden mehrere Halteplatten vorgesehen, können diese an den weiteren Seiten gelenkig zu einer Kette verbunden sein. Die mindestens eine Halteplatte kann austauschbar ausgebildet sein, um beispielsweise eine Anpassung an unterschiedliche Halteeinrichtungen bzw. Schweißplatten zu ermöglichen.

Um die Halteeinrichtung mit der mindestens einen Abdeckung gegen die Innenseite des Kanals anzudrücken, kann die Andrückeinrichtung beispielsweise in Form eines pneumatisch oder hydraulisch aufblasbaren Kissens vorgesehen sein, welches sich gegenüber der Bearbeitungseinrichtung, insbesondere der mindestens einen Halteplatte abstützt und die Halteeinrichtung mit der Abdeckung gegen die Innenseite des Kanals andrückt. Das Kissen kann entsprechend einer Ziehharmonika zwei beabstandete stabile Platten aufweisen, die umlaufend über eine elastische Blase verbunden sind. Die äußere Platte kann dabei direkt als Halteeinrichtung für die mindestens eine Abdeckung ausgebildet sein. Die Blase kann eine Riffelung bzw. Faltung parallel zu den Platten aufweisen, um ein Verkippen der Platten zueinander beim Aufblasen der Blase zu verhindern. Alternativ können jedoch auch elektrische Aktuatoren vorgesehen sein, welche die mindestens eine Abdeckung gegen die Innenseite des Kanals andrücken.

In einer bevorzugten Ausführungsform kann die Bearbeitungseinrichtung alternativ oder zusätzlich einen Bearbeitungskopf, insbesondere einen Bohr-und/oder Fräskopf, umfassen, was eine zusätzliche Bearbeitung und Vorbereitung der zu bearbeitenden Stelle des Kanals ermöglicht. Besonders bevorzugt kann die Bearbeitungseinrichtung modular zur auswechselbaren Aufnahme der Halteeinrichtung und/oder des Bearbeitungskopfs ausgebildet sein, sodass je nach Anwendungsfall die Bearbeitungscinrichtung gezielt bestückbar ist.

Um ein Verfahren der Kanalbearbeitungsvorrichtung entlang des zu sanierenden Kanals zu ermöglichen, kann diese einen Positionierwagen umfassen, der mit dem Grundkörper gelenkig verbunden ist. Alternativ kann auch direkt an dem Grundkörper eine Antriebsvorrichtung beispielsweise für mindestens eine der Rollen vorgesehen sein. Hierdurch wird ein präzises Positionieren der Kanalbearbeitungsvorrichtung in Längsrichtung des Kanals ermöglicht.

Das Verfahren zur Bearbeitung eines Kanals, insbesondere einer Innenseite eines Kanals, umfasst dabei folgende Schritte: Verfahren einer insbesondere wie beschrieben ausgebildeten Kanalbearbeitungsvorrichtung innerhalb des Kanals in Längsrichtung des Kanals, so dass eine Bearbeitungseinrichtung der Kanalbearbeitungsvorrichtung gegenüber einem zu bearbeitenden Kanalabschnitt positioniert ist, Andrücken einer Halteeinrichtung mit mindestens einer, insbesondere flachen, Abdeckung gegen die Kanalinnenseite zur Anbringung der Abdeckung an dem Kanalabschnitt, Verbinden der Abdeckung mit der Kanalinnenseite.

Nach dem Verfahren der Kanalbearbeitungsvorrichtung zur Positionierung in Längsrichtung des Kanals erfolgt eine zusätzliche Positionierung der Bearbeitungseinrichtung durch motorisches Drehen der Bearbeitungsvorrichtung um eine Drehachse des Grundkörpers der Kanalbearbeitungsvorrichtung, insbesondere um eine zur Längsachse des Kanals parallele Drehachse.

Weitere Besonderheiten und Vorzüge der Erfindung ergeben sich aus der folgenden Beschreibung eines bevorzugten Ausführungsbeispiels anhand der Zeichnungen. Es zeigen:
- Fig. 1: eine perspektivische Darstellung einer Kanalbearbeitungsvorrichtung;
- Fig. 2: eine erste perspektivische Detailansicht der Kanalbearbeitungsvorrichtung von Figur 1;
- Fig. 3: eine zweite perspektivische Detailansicht der Kanalbearbeitungsvorrichtung von Figur 2 und
- Fig. 4: eine schematische Darstellung der Kanalbearbeitungsvorrichtung von Figur 1 mit einen Kanal und einem Positionierwagen.

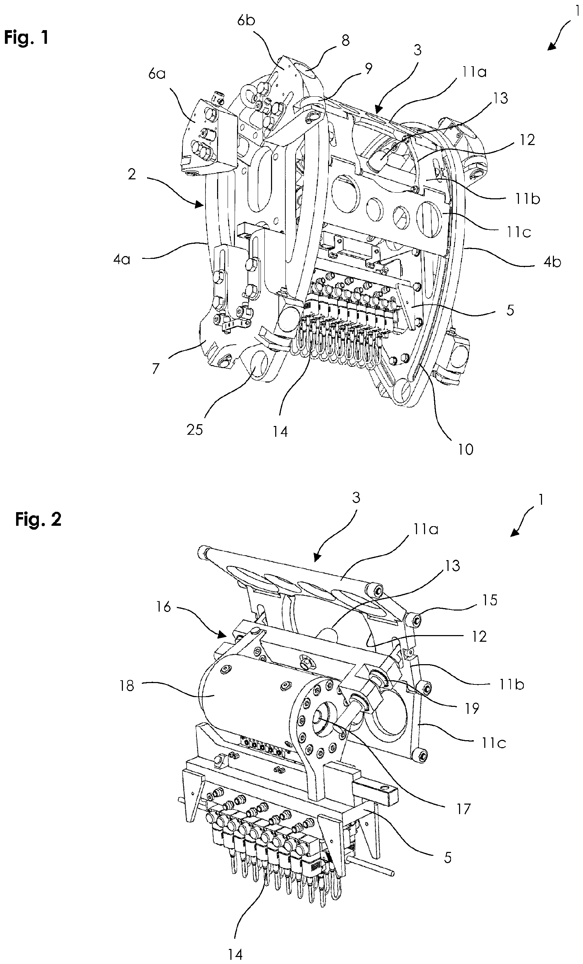

Figur 1 zeigt eine Kanalbearbeitungsvorrichtung 1 zur Anordnung innerhalb eines Kanals, beispielsweise um den Kanal zu sanieren oder eine Abzweigung in den Kanal zu integrieren. Die Kanalbearbeitungsvorrichtung 1 umfasst einen Grundkörper 2 sowie eine an den Grundkörper 2 motorisch bewegbar angeordnete Bearbeitungseinrichtung 3 zur Bearbeitung eines Kanalabschnitts. Der Grundkörper 2 weist zwei voneinander beabstandete Träger 4a, 4b mit im Wesentlichen identischer Außenkontur auf, wobei die Außenkontur Eiprofil-förmig ausgebildet ist. Die beiden Träger 4a, 4b sind im Wesentlichen plattenförmig ausgebildet und parallel im Abstand zueinander angeordnet. Über ein Verbindungsstück 5 sind die Träger 4a, 4b fest miteinander verbunden. Die Träger 4a, 4b sind dabei derart zueinander angeordnet, dass diese zueinander fluchten, d. h., dass bei einer orthogonalen Draufsicht auf einen der Träger der weitere Träger direkt dahinter ohne seitlichen Versatz angeordnet ist.

Um den Grundkörper 2 gegenüber der Innenseite eines hier nicht dargestellten Kanals abzustützen, weisen die Träger 4a, 4b jeweils mehrere Abstützeinrichtungen auf, welche exemplarisch für den hier dargestellten vorderen Träger 4a nachfolgend beschrieben werden, spiegelbildlich jedoch ebenso an dem Träger 4b ausgebildet sind. An dem Träger 4a sind zwei obere Abstützvorrichtungen 6a, 6b und eine untere Abstützvorrichtung 7 vorgesehen, welche in radialer Richtung gegenüber dem Träger 4a verstellbar und mittels Schrauben fixiert sind. An den oberen Abstützvorrichtungen 6a, 6b ist jeweils ein Fixierkolben und eine Rolle angeordnet, beispielsweise an der oberen Abstützvorrichtung 6b der Fixierkolben 8 und die Rolle 9. An der unteren Abstützvorrichtung 7 sind zwei Fixierkolben und zwei Rollen vorgesehen. Die Fixierkolben der oberen und unteren Abstützvorrichtung zeigen in Draufsicht auf den Träger 4a nach außen, d. h. die Achse der Kolben steht rechtwinklig auf der Eiprofilförmigen Außenkontur des Trägers 4a. Die Achsen der Rollen sind in Umfangsrichtung der Außenkontur des Trägers 4a ausgerichtet, so dass diese ein Verfahren des Grundkörpers in dem Kanal orthogonal zu den flachen Trägern 4a, 4b und damit in Längsrichtung des Kanals ermöglichen.

Auf den einander zugewandten Seiten der Träger 4a, 4b ist jeweils eine Führung in Form einer Nut ausgebildet, welche exemplarisch anhand der Nut 10 in dem Träger 4b gezeigt ist. Die Nut 10 und die hier nicht gezeigte korrespondierende Nut in dem Träger 4a sind spiegelbildlich ausgebildet und weisen insbesondere einen identischen Verlauf auf, der entsprechend der Innengeometrie des Kanals im Querschnitt ausgebildet ist. Bei der gezeigten Ausführungsform einer Kanalbearbeitungsvorrichtung für einen Eiprofil-Kanal entspricht der Verlauf der Führungen zumindest einem Teil einer Eiprofil-Form. Da auch die Außenkonturen der Träger 4a, 4b eine entsprechende Form aufweisen, verlaufen die Führungen in den Trägern 4a, 4b mit gleichmäßigem, geringem Abstand zur Außenkontur.

Zwischen den Trägern 4a, 4b ist die Bearbeitungseinrichtung 3 angeordnet, welche an zwei gegenüberliegenden Seiten in den Führungen an den Trägern 4a, 4b verschiebbar gelagert ist. Die Bearbeitungseinrichtung 3 umfasst mehrere gelenkig miteinander verbundene Halteplatten 11a, 11b, 11c, die jeweils an zwei gegenüberliegenden Seiten in den Führungen beweglich gelagert sind. An den weiteren Seiten sind die Halteplatten 11a, 11b, 11c gelenkig zu einer Kette verbunden. Durch die Führungen sind die Halteplatten 11a, 11b, 11c um eine Drehachse 17 des Grundkörpers 2 drehbar gelagert. Diese Drehachse 17 des Grundkörpers 2 steht senkrecht auf den plattenförmigen Trägern 4a, 4b und ist bei Anordnung der Vorrichtung in einem Kanal parallel zu der Längsachse des Kanals angeordnet. Durch ein Verschieben der Halteplatten 11a, 11b, 11c entlang der Führungen in den Trägern 4a, 4b kann die Bearbeitungseinrichtung 3 in Umfangsrichtung der Träger 4a, 4b über einen Winkelbereich von mindestens 180°, bevorzugt mindestens 270°, um die Drehachse 17 gedreht werden, wobei die Halteplatten 11a, 11b, 11c je nach Ausgestaltung der Führungen zusätzlich noch verschwenken.

Die mittlere Halteplatte 11b weist eine zentrale, kreisförmige Aussparung 12 auf, welche sich geringfügig in die angrenzenden Halteplatten 11a, 11c erstreckt. Die Bearbeitungseinrichtung 3 umfasst eine ausrichtbare Kamera 13 welche mittig zu der Aussparung 12 radial nach innen versetzt angeordnet ist und einen Blick durch die Aussparung 12 auf die Innenseite des Kanals ermöglicht.

An dem Verbindungsstück 5 ist eine Steuerung mit mehreren Steuerungsventilen 14 angeordnet, welche ein hydraulisches oder pneumatisches Betätigen von Fixierkolben und ggf. weiterer, nachfolgend beschriebener Aktuatoren steuert. Insbesondere kann die Steuerung derart ausgebildet sein, dass diese ein separates Ansteuern und Verfahren der Fixierkolben ermöglicht. Hierdurch kann die Kanalbearbeitungsvorrichtung 1 unabhängig von dem Innenquerschnitt des Kanals besonders fest und lagegenau in dem Kanal fixiert werden, was wiederum ein Anpressen eines Füllmittels oder einer Schweißplatte aus PP oder PE mit besonders hohem Druck, beispielsweise mit einem Druck von bis zu 4 Tonnen, ermöglicht.

In Figur 2 ist eine perspektivische Detailansicht auf die Kanalbearbeitungsvorrichtung 1 von Figur 1 gezeigt. Zur einfacheren Darstellung sind die Träger 4a, 4b mit den Abstützvorrichtungen 6a, 6b, 7 in Figur 2 ausgeblendet. Wie der Zeichnung zu entnehmen ist, weisen die Halteplatten 11a, 11b, 11c an den gegenüberliegenden Seiten Kugellager 15 auf, welche eine spielfreie Lagerung und reibungsarme Bewegung der Bearbeitungseinrichtung 3 in den Führungen ermöglichen. Dabei ist an den gegenüberliegenden Seiten der Halteplatten 11a, 11b, 11c jeweils ein Kugellager 15 koaxial zur Gelenkverbindung zwischen den Halteplatten 11a, 11b bzw. 11b, 11c und ein weiteres am freien Ende der Halteplatten 11a, 11c angeordnet.

Die Bearbeitungseinrichtung 3 ist über einen Haltearm 16 mit der Drehachse 17 des Grundkörpers 2 verbunden. Die Drehachse 17 wird durch den Rotor eines Aktuators in Form eines Stellmotors 18 gebildet, von welcher der Haltearm 16 radial vorsteht. Die Ansteuerung des Stellmotors 18 erfolgt bei dem gezeigten Ausführungsbeispiel hydraulisch über Steuerventile 14. Es ist denkbar einen elektrisch oder pneumatisch angetriebenen Stellmotor vorzusehen. Die Drehachse 17 ist dabei derart orientiert, dass diese senkrecht zu den im Wesentlichen plattenförmigen Trägern 4a, 4b ausgerichtet ist.

Der Haltearm 16 ist in der Länge veränderbar ausgebildet, was dadurch erreicht wird, dass der Haltearm 16 mindestens ein Linearlager 19 mit einer Lagerbuchse und einer darin gelagerten Stange umfasst. Bei dem gezeigten Ausführungsbeispiel sind zwei Stangen vorgesehen, welche frei beweglich in radialer Richtung von der Drehachse 17 in den Buchsen geführt sind. Am radial äußeren freien Ende der Stangen ist die mittlere Halteplatte 11b um eine zur Drehachse 17 parallele Schwenkachse verschwenkbar gelagert. Durch die frei verstellbare Länge des Haltearms 16 kann sich der Haltearm 16 ohne Verspannungen an den von der Winkelposition des Haltearms 16 abhängigen Abstand der Drehachse 17 zur Eiprofil-förmig Führung in den Trägern 4a, 4b anpassen. Es kann jedoch auch vorgesehen sein, den Haltearm 16 durch eine Feder geringfügig in Längsrichtung der Stangen vorzuspannen, so dass die Halteplatten 11a, 11b, 11c radial nach außen beaufschlagt werden. Bei einer kreisförmigen Ausgestaltung der Führungen für einen kreisförmigen Kanal wäre eine entsprechende frei verstellbare Länge des Haltearms nicht zwingend erforderlich. Um das Drehmoment beim Verstellen der Bearbeitungseinrichtung 3 abzustützen, ist das Gehäuse des Stellmotors 19 mit dem Grundkörper 2 fest verbunden.

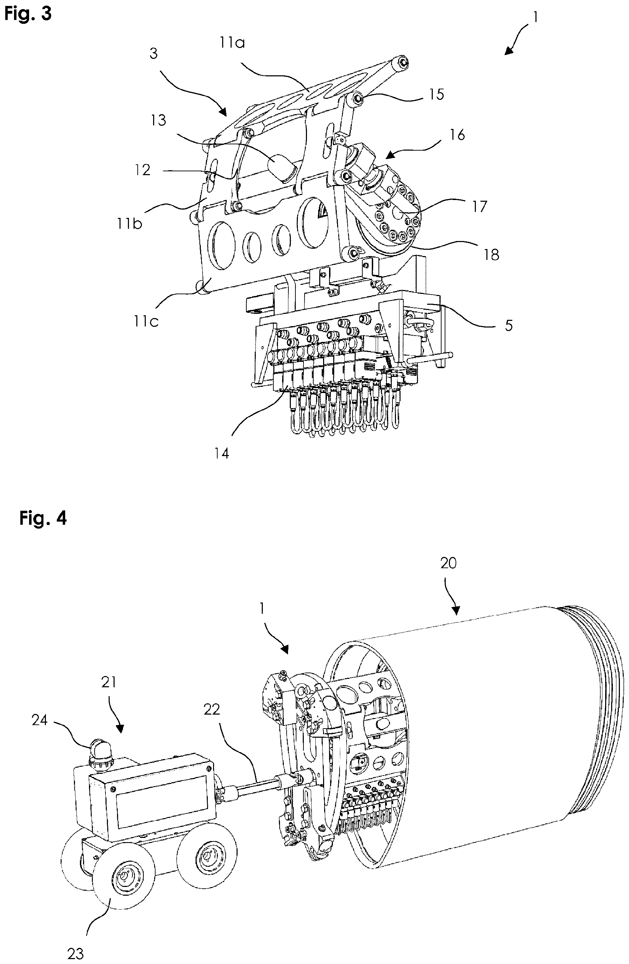

In Figur 3 ist eine weitere perspektivische Detailansicht auf die Kanalbearbeitungsvorrichtung 1 von Figur 2 gezeigt. Wie der Zeichnung zu entnehmen ist, ist die Kamera 13 an dem Haltearm 16 befestigt und mittig zur Aussparung 12, jedoch nach innen in Richtung hin zu der Drehachse 17 versetzt angeordnet. Die Blickrichtung der Kamera 13 ist radial nach außen von der Drehachse 17 weg und durch die Aussparung 12 hindurch gerichtet, wobei die Kamera 13 auch einen ansteuerbaren Kamerakopf zur Einstellung der Blickrichtung aufweisen kann.

Mit den Halteplatten 11a, 11b, 11c und insbesondere mit den in Richtung von der Drehachse 17 gesehen außen liegenden Flächen der Halteplatten 11a, 11b, 11c ist eine hier nicht dargestellte Halteeinrichtung für mindestens eine zur Anbringung an der Kanalinnenseite vorgesehene Abdeckung verbunden. Bei der Abdeckung kann es sich um eine Schweißplatte aus einem thermoplastischen Material wie PP oder PE, insbesondere einen Elektroschweißsattel ggf. mit eingearbeiteter Kaschierung (innen oder außen) handeln. Besonders bevorzugt ist die Abdeckung als ringförmige Scheibe ausgebildet, welche insbesondere ein Durchgangsloch aufweist. Ebenso weist die Halteeinrichtung bevorzugt ein Durchgangsloch auf, welches mit dem Durchgangsloch in der mindestens einen Abdeckung überlappt. Die Abdeckung kann an der Halteeinrichtung mittels eines nicht dargestellten Greifelements der Halteeinrichtung oder auch mittels eines lösbaren Klebstoffs und/oder Trennmittels gehalten werden. Die Halteeinrichtung mit der mindestens einen Abdeckung wird dabei derart an der Außenseite der Halteplatten 11a, 11b, 11c positioniert, dass die Aussparung 12 und das Durchgangsloch in der Abdeckung und der Halteeinrichtung fluchtend übereinanderliegen, so dass mit der Kamera 13 die Innenseite des Kanals durch die Aussparung 12 und die Durchgangslöcher sichtbar ist und eine exakte Positionierung der Abdeckung in Bezug auf die Innenseite des Kanals möglich ist.

Die Abdeckung kann eine zusätzliche Haftbrücke aufweisen, um die Haftung an der Innenseite des Kanals bzw. einem abzweigenden Rohr zu erhöhen. Hierzu kann beispielsweise vorgesehen sein, dass die Schweißplatte an der radial außenliegenden Oberfläche, welche zur Anlage an der Kanalinnenseite vorgesehen ist, als Haftbrücke eine erhöhte Rauigkeit, eine Perforierung, Rillen oder dergleichen aufweist. Alternativ oder zusätzlich kann die Haftbrücke auch ein Gewebe umfassen.

Mittels der Abdeckung mit dem Durchgangsloch kann beispielsweise eine Abzweigung eines Rohrs aus dem Kanal abgedichtet werden, indem das Durchgangsloch in der Abdeckung, welches in dem Durchmesser des abzweigenden Rohrs entspricht, zu dem Rohr positioniert wird und hierdurch die Abdeckung den Übergang zwischen Rohr und Kanal abdichten kann. Es ist jedoch auch möglich, eine Halteeinrichtung mit einer anderen Arten von Abdeckungen, beispielsweise ohne Durchgangsloch, an der Außenseite der Halteplatten 11a, 11b, 11c vorzusehen und diese mithilfe der Kamera 13 gegenüber einer zu bearbeitenden Stelle an der Kanalinnenseite zu positionieren.

Die Anbringung der hier nicht dargestellten Abdeckungen kann dabei derart erfolgen, dass nach einer Positionierung der Kanalbearbeitungsvorrichtung 1 in Längsrichtung des Kanals zuerst die Fixierkolben 8 radial nach außen ausfahren, um die Kanalbearbeitungsvorrichtung 1 in dem Kanal zu fixieren. Anschließend wird durch ein Ansteuern des Stellmotors 18 der Haltearm 16 um die Drehachse 17 und damit auch die Halteplatten 11a, 11b, 11c verdreht, welche sich entlang der Führungen in den Trägern 4a, 4b bewegen. Hierbei wird die Position der Halteplatten 11a, 11b, 11c mittels der Kamera 13 überwacht und derart eingestellt, dass die Aussparung 12 bzw. das Durchgangsloch in der Halteeinrichtung und der mindestens einen Abdeckung mit der zu bearbeitenden Stelle an der Kanalinnenseite, beispielsweise einem abzweigenden Rohr, fluchtet.

Um die Halteeinrichtung mit der mindestens einen Abdeckung an der Außenseite der Halteplatten 11a, 11b, 11c gegen die Kanalinnenseite anzudrücken, umfasst Halteeinrichtung angrenzend an die Halteplatten 11a, 11b, 11c eine Andrückeinrichtung in Form eines hydraulisch oder pneumatisch aufblasbaren Kissens, welches sich zuerst in einem drucklosen, zusammengezogenen Zustand befindet. Sobald die Positionierung der Abdeckung mittels des Stellmotors 18 abgeschlossen ist, wird das Kissen mittels einer Pumpe bzw. eines Kompressor, welcher bevorzugt in der Kanalbearbeitungsvorrichtung 1 integriert ist, hydraulisch oder pneumatisch aufgeblasen, wodurch dieses die Abdeckung gegen die Kanalinnenseite andrückt und sich dabei an den Halteplatten 11a, 11b, 11c abstützt. Um die Abdeckung stoffschlüssig mit der Kanalinnenseite zu verbinden, wird die Abdeckung erhitzt, indem Spannung an einen elektrischen Leiter innerhalb der thermoplastischen Abdeckung angelegt wird. Bei dem elektrischen Leiter handelt es sich beispielsweise um einen Widerstandsdraht, welcher sich aufgrund des elektrischen Stroms erhitzt und damit die thermoplastische Abdeckung erwärmt. Sobald die Abdeckung angeschmolzen ist, verbindet sich diese mit der Kanalinnenseite stoffschlüssig. Nach einem ausreichenden Abkühlen der Abdeckung kann der Druck in dem Kissen reduziert werden, wodurch sich die Abdeckung von dem Kissen löst.

Die Halteeinrichtung kann einen einfach lösbaren Klebstoff umfassen, um die Abdeckung an der Halteeinrichtung bzw. auch direkt an dem Kissen lösbar zu fixieren, wobei die Haltekraft des Klebstoffs entsprechend kleiner als die stoffschlüssige Haltekraft der Abdeckung an der Kanalinnenseite auszubilden ist. Zusätzlich oder alternativ kann die Halteeinrichtung auch ein steuerbares Greifelement umfassen, welches die Abdeckung zeitweise fixiert.

Um in einem nachfolgenden Bearbeitungsschritt unmittelbar weitere Abdeckungen an der Kanalinnenseite anbringen zu können, umfasst die Halteeinrichtung ein hier nicht dargestelltes Magazin zur Aufnahme mehrerer derartiger Abdeckungen, beispielsweise für insgesamt fünf Abdeckungen. In dem Magazin können die flachen Abdeckungen übereinander gestapelt sein, so dass die äußerste Abdeckung in Kontakt mit der Kanalinnenseite gebracht werden kann und dazu ggf. radial nach außen vorsteht. Die Andrückeinrichtung in Form des aufblasbaren Kissens ist dabei zwischen dem Magazin mit den mehreren Abdeckungen und den Halteplatten 11a, 11b, 11c angeordnet, so dass durch Aufblasen des Kissens jeweils das gesamte Magazin gegen die Innenseite angedrückt wird. Da nur die radial außenliegende Abdeckung durch Anlegen eines elektrischen Stroms an die darin angeordneten Heizdrähte erwärmt wird, verbindet sich nur die äußerste Abdeckung mit der Kanalinnenseite stoffschlüssig.

Um ein einfaches Lösen der äußeren Abdeckung von dem Magazin zu erreichen kann beispielsweise vorgesehen sein, dass die Heizdrähte in den Abdeckungen an der radial ausliegenden Außenseite angeordnet sind, sodass sich im Wesentlichen nur diese Außenseite erhitzt und hierdurch die übrigen Abdeckungen des Magazins nicht erwärmt werden. Alternativ oder zusätzlich kann vorgesehen sein, dass sich der Klebstoff bzw. das Trennmittel zwischen den Abdeckungen durch Erwärmung löst, so dass beim Erwärmen der äußersten Abdeckung auch eine Trennung von den weiteren Abdeckungen des Magazins erfolgt. Als Trennschicht zwischen den Abdeckungen kann insbesondere eine Teflonschicht vorgesehen sein. Weiter kann zusätzlich oder alternativ auch das bereits beschriebene Greifelement ausgebildet sein, jeweils die übrigen Abdeckungen des Magazins festzuhalten und hierdurch ein Loslösen nur der äußersten Abdeckung zu erreichen.

Alternativ oder zusätzlich kann die Bearbeitungseinrichtung mindestens einen hier nicht dargestellten Bearbeitungskopf beispielsweise in Form eines Bohr-und/oder Fräskopfs umfassen. Dies ermöglicht die Bearbeitung der Kanalinnenseite, beispielsweise auch zur Vorbereitung vor der Anbringung entsprechender Abdeckungen mittels der Halteeinrichtung. Der Bearbeitungskopf kann insbesondere wie der in der DE 10 2015 122 407 A1 beschriebene Roboter zur Durchführung des dort offenbarten Verfahrens ausgebildet sein. Die Bearbeitungseinrichtung kann zudem modular ausgebildet sein, so dass je nach Anwendungsfall die Halteeinrichtung und/oder der Bearbeitungskopf montierbar sind.

In Figur 4 ist eine schematische Darstellung der Kanalbearbeitungsvorrichtung 1 im Betrieb gezeigt. Zur Positionierung der Kanalbearbeitungsvorrichtung 1 innerhalb eines Kanals 20 ist ein Positionierwagen 21 vorgesehen. Der Positionierwagen 21 ist mit der Kanalbearbeitungsvorrichtung 1 über eine Gelenksstange 22 verbunden und ermöglicht so das Schieben oder Ziehen der Kanalbearbeitungsvorrichtung 1 in dem Kanal 20. Der Positionierwagen 21 umfasst mehrere Räder 23, die nach Bedarf mit Raupenketten ausgestattet werden können, sowie eine weitere Kamera 24, welche ein ferngesteuertes Verfahren des Positionierwagens 21 in dem Kanal 20 ermöglichen.

Die Kanalbearbeitungsvorrichtung 1 kann zudem eine EDV-Einheit umfassen, in welcher die Bearbeitungsparameter zu dem Bearbeitungsvorgang abgespeichert und ausgewertet werden, beispielsweise Bilder der Kamera 13, welche die zu bearbeitende Stelle des Kanals 20 vor der Bearbeitung, während der Bearbeitung und/oder nach der Bearbeitung zeigen. Des Weiteren können auch Positions- und Messdaten in der EDV-Einheit erfasst werden. Die Bearbeitungsparameter können anschließend ausgewertet und zur Dokumentation beispielsweise in Form eines Protokolls als Nachweis ausgegeben werden.

Neben der beschriebenen Kamera 13 zur Positionierung der Kanalbearbeitungsvorrichtung 1 kann die Lokalisierung der zu bearbeitenden Kanalabschnitte zusätzlich oder alternativ auch auf weitere Arten erfolgen, beispielsweise mittels Ultraschallerfassung, mittels in dem Kanal vorhandener (beispielsweise während Einmessarbeiten angebrachter) Lokalisierungshilfen wie Chips, Sensoren etc., die von einem Sensor der Kanalbearbeitungsvorrichtung 1 erfasst werden, oder mittels Vergleich mit bereits ermittelten 3D-Daten (aus einer vorangegangenen TV-Befahrung). Die so ermittelten Informationen können dabei auf einem Display angezeigt werden und die Positionierung kann hierauf aufbauend manuell oder (teil-)automatisiert über ein Steuerungspanel, beispielsweise ein Touchpad, erfolgen.

### Bezugszeichenliste:

- 1: Kanalbearbeitungsvorrichtung
- 2: Grundkörper
- 3: Bearbeitungseinrichtung
- 4a, 4b: Träger
- 5: Verbindungsstück
- 6a, 6b: Obere Abstützvorrichtung
- 7: Untere Abstützvorrichtung
- 8: Fixierkolben
- 9: Rolle
- 10: Nut
- 11a, 11b, 11c: Halteplatte
- 12: Aussparung
- 13: Kamera
- 14: Steuerventile
- 15: Kugellager
- 16: Haltearm
- 17: Drehachse
- 18: Stellmotor
- 19: Linearlager
- 20: Kanal
- 21: Positionierwagen
- 22: Gelenkstange
- 23: Räder
- 24: Weitere Kamera
- 25: Durchführung für Kabel

## Patentansprüche

1. Kanalbearbeitungsvorrichtung (1) zur Anordnung innerhalb eines Kanals (20), mit einem Grundkörper (2) und einer an dem Grundkörper (2) angeordneten Bearbeitungseinrichtung (3) zur Bearbeitung eines Kanalabschnitts,
wobei die Bearbeitungseinrichtung (3) mindestens eine Halteeinrichtung für eine zur Anbringung an der Kanalinnenseite vorgesehene Abdeckung aufweist und die Halteeinrichtung zum Andrücken der Abdeckung gegen eine Innenwand des Kanals (20) von dem Grundkörper (2) weg nach außen bewegbar ist, wobei die Bearbeitungseinrichtung (3) mit einer Drehachse (17) des Grundkörpers über mindestens einen motorisch drehbaren Haltearm (16) zur Bewegung der Bearbeitungseinrichtung verbunden ist,
**dadurch gekennzeichnet,**
**dass** die Bearbeitungseinrichtung (3) mehrere gelenkig miteinander verbundene Halteplatten (11a; 11b; 11c) umfasst, die mittels Führungen (10) an dem Grundkörper (2) um die Drehachse (17) des Grundkörpers (2) drehbar gelagert sind.

2. Kanalbearbeitungsvorrichtung (1) nach Anspruch 1,
**dadurch gekennzeichnet,**
**dass** die Halteeinrichtung ein Magazin zur Aufnahme mehrerer, insbesondere flacher, Abdeckungen aufweist.

3. Kanalbearbeitungsvorrichtung (1) nach Anspruch 1 oder 2,
**dadurch gekennzeichnet,**
**dass** die Bearbeitungseinrichtung (3) an zwei gegenüberliegenden Seiten, mittels Führungen (10) an dem Grundkörper (2) um die Drehachse (17) des Grundkörpers (2) drehbar gelagert ist.

4. Kanalbearbeitungsvorrichtung (1) nach Anspruch 3,
**dadurch gekennzeichnet,**
**dass** die Bearbeitungseinrichtung (3) über einen Winkelbereich von mindestens 180°, bevorzugt mindestens 270°, um die Drehachse (17) bewegbar ist.

5. Kanalbearbeitungsvorrichtung(1) nach Anspruch 3 oder 4,
**dadurch gekennzeichnet,**
**dass** die Bearbeitungseinrichtung (3) mit der Drehachse (17) über mindestens einen radial von der Drehachse (17) vorstehenden Haltearm (16) verbunden ist.

6. Kanalbearbeitungsvorrichtung (1) nach Anspruch 5,
**dadurch gekennzeichnet,**
**dass** die Länge des Haltearms (16) veränderbar, vorzugsweise verstellbar, ist.

7. Kanalbearbeitungsvorrichtung(1) nach einem der vorhergehenden Ansprüche,
**dadurch gekennzeichnet,**
**dass** der Grundkörper (2) zwei voneinander beabstandete Träger (4a; 4b) mit im Wesentlichen identischer Außenkontur umfasst, wobei die Außenkontur insbesondere kreisförmig oder Eiprofil-förmig ausgebildet ist.

8. Kanalbearbeitungsvorrichtung (1) nach einem der vorhergehenden Ansprüche,
**dadurch gekennzeichnet,**
**dass** an dem Grundkörper (2), insbesondere den Trägern (4a; 4b), mehrere Abstützeinrichtungen (6a; 6b; 7; 8) zum Verfahren und/oder Fixieren der Kanalbearbeitungsvorrichtung (1) in dem zu bearbeitenden Kanal (20) vorgesehen sind.

9. Kanalbearbeitungsvorrichtung(1) nach Anspruch 7 oder 8,
**dadurch gekennzeichnet,**
**dass** die Bearbeitungseinrichtung (3) zwischen den Trägern (4a; 4b) angeordnet und an den zwei gegenüberliegenden Seiten in Führungen (10) an den Trägern (4a; 4b) verschiebbar gelagert ist.

10. Kanalbearbeitungsvorrichtung (1) nach einem der vorhergehenden Ansprüche,
**dadurch gekennzeichnet,**
**dass** die Führungen (10) als Nuten und/oder Schienen in dem Grundkörper (2), insbesondere den Trägern (4a; 4b), ausgebildet sind.

11. Kanalbearbeitungsvorrichtung (1) nach einem der vorhergehenden Ansprüche,
**dadurch gekennzeichnet,**
**dass** die Führungen (10) einen Verlauf aufweisen, welcher zumindest einem Teil einer Kreisform oder Eiprofil-Form entspricht.

12. Kanalbearbeitungsvorrichtung (1) nach einem der vorhergehenden Ansprüche,
**dadurch gekennzeichnet,**
**dass** die Bearbeitungseinrichtung (3) mindestens einen Bearbeitungskopf, insbesondere einen Bohr- und/oder Fräskopf umfasst.

13. Verfahren zur Bearbeitung einer Innenseite eines Kanals (20), umfassend die Schritte:
- Verfahren einer Kanalbearbeitungsvorrichtung (1) innerhalb des Kanals (20) in Längsrichtung des Kanals (20) und zusätzliche Positionierung einer Bearbeitungseinrichtung (3) durch motorisches Drehen der Bearbeitungseinrichtung (3) um eine Drehachse (17) eines Grundkörpers (2) der Kanalbearbeitungsvorrichtung (1) mittels mindestens eines motorisch drehbaren Haltearms (16), welcher die Bearbeitungseinrichtung (3), die mehrere gelenkig miteinander verbundene und mittels Führungen (10) an dem Grundkörper (2) um die Drehachse (17) des Grundkörpers (2) drehbar gelagerte Halteplatten (11a; 11b; 11c) umfasst, mit der Drehachse (17) des Grundkörpers (2) verbindet, so dass die Bearbeitungseinrichtung (3) der Kanalbearbeitungsvorrichtung (1) mit den Halteplatten (11a; 11b; 11c) gegenüber einem zu bearbeitenden Kanalabschnitt positioniert ist,
- Andrücken einer Halteeinrichtung mit mindestens einer, insbesondere flachen, Abdeckung gegen die Kanalinnenseite zur Anbringung der Abdeckung an dem Kanalabschnitt,
- Verbinden der Abdeckung mit der Kanalinnenseite.

## Claims

1. Channel processing device (1) for arranging within a channel (20), having a main body (2) and a processing unit (3), which is arranged on the main body (2), for processing a channel section, wherein the processing unit (3) has at least one holding unit for a cover provided for attaching to the inner side of the channel, and the holding unit is movable outwards away from the main body (2) in order to press the cover against an inner wall of the channel (20), wherein the processing unit (3) is connected to a rotation axle (17) of the main body via at least one motor-rotatable holding arm (16) in order to move the processing unit,
**characterized**
**in that** the processing unit (3) comprises a plurality of holding plates (11a; 11b; 11c) which are connected in an articulated manner to one another and are mounted rotatably about the rotation axle (17) of the main body (2) by means of guides (10) on the main body (2).

2. Channel processing device (1) according to Claim 1,
**characterized**
**in that** the holding unit has a magazine for receiving a plurality of, in particular flat, covers.

3. Channel processing device (1) according to Claim 1 or 2,
**characterized**
**in that** the processing unit (3) is mounted on two opposite sides on the main body (2) by means of guides (10) so as to be rotatable about the rotation axle (17) of the main body (2).

4. Channel processing device (1) according to Claim 3,
**characterized**
**in that** the processing unit (3) is movable about the rotation axle (17) over an angular region of at least 180°, preferably at least 270°.

5. Channel processing device (1) according to Claim 3 or 4,
**characterized**
**in that** the processing unit (3) is connected to the rotation axle (17) via at least one holding arm (16) protruding radially from the rotation axle (17).

6. Channel processing device (1) according to Claim 5,
**characterized**
**in that** the length of the holding arm (16) is changeable, preferably adjustable.

7. Channel processing device (1) according to one of the preceding claims,
**characterized**
**in that** the main body (2) comprises two spaced-apart supports (4a; 4b) with a substantially identical outer contour, wherein the outer contour is in particular circular or in the form of an oval profile.

8. Channel processing device (1) according to one of the preceding claims,
**characterized**
**in that** a plurality of supporting units (6a; 6b; 7; 8) for moving and/or fixing the channel processing device (1) in the channel (20) to be processed are provided on the main body (2), in particular on the supports (4a; 4b) .

9. Channel processing device (1) according to Claim 7 or 8,
**characterized**
**in that** the processing unit (3) is arranged between the supports (4a; 4b) and is mounted displaceably on the supports (4a; 4b) in guides (10) on the two opposite sides.

10. Channel processing device (1) according to one of the preceding claims,
**characterized**
**in that** the guides (10) are designed as grooves and/or rails in the main body (2), in particular in the supports (4a; 4b).

11. Channel processing device (1) according to one of the preceding claims,
**characterized**
**in that** the guides (10) have a profile which corresponds to at least a part of a circular shape or oval profile shape.

12. Channel processing device (1) according to one of the preceding claims,
**characterized**
**in that** the processing unit (3) comprises at least one processing head, in particular a drilling and/or milling head.

13. Method for processing an inner side of a channel (20),
comprising the steps of:
- moving a channel processing device (1) within the channel (20) in the longitudinal direction of the channel (20) and additionally positioning a processing unit (3) by motorized rotation of the processing unit (3) about a rotation axle (17) of a main body (2) of the channel processing device (1) by means of at least one motor-rotatable holding arm (16) which connects the processing unit (3), which comprises a plurality of holding plates (11a; 11b; 11c) which are connected to one another in an articulated manner and are mounted rotatably about the rotation axle (17) of the main body (2) by means of guides (10) on the main body (2), to the rotation axle (17) of the main body (2) such that the processing unit (3) of the channel processing device (1) is positioned with the holding plates (11a; 11b; 11c) in relation to a channel section to be processed,
- pressing a holding unit with at least one, in particular flat, cover against the inner side of the channel in order to attach the cover to the channel section,
- connecting the cover to the inner side of the channel.

## Revendications

1. Dispositif de traitement de canal (1) destiné à être agencé à l'intérieur d'un canal (20), comprenant un corps de base (2) et un organe de traitement (3) disposé sur le corps de base (2) pour traiter un tronçon du canal,
dans lequel
l'organe de traitement (3) comprend au moins un organe de maintien d'un couvercle prévu pour être monté sur la face intérieure du canal, et
l'organe de maintien peut être déplacé vers l'extérieur en s'éloignant du corps de base (2) pour presser le couvercle contre une paroi intérieure du canal (20),
l'organe de traitement (3) est relié à un axe de rotation (17) du corps de base par au moins un bras de maintien (16) mobile en rotation par voie motrice et destiné à déplacer l'organe de traitement,
**caractérisé en ce que**
l'organe de traitement (3) comprend plusieurs plaques de maintien (11a ; 11b - 11c) reliées entre elles de manière articulée, qui sont montées au moyen de guides (10) sur le corps de base (2) de manière à pouvoir tourner autour de l'axe de rotation (17) du corps de base (2).

2. Dispositif de traitement de canal (1) selon la revendication 1,
**caractérisé en ce que**
l'organe de maintien comprend un magasin destiné à recevoir plusieurs couvercles, en particulier des couvercles plats.

3. Dispositif de traitement de canal (1) selon la revendication 1 ou 2,
**caractérisé en ce que**
l'organe de traitement (3) est monté sur deux côtés opposés au moyen de guides (10) sur le corps de base (2), de manière à pouvoir tourner autour de l'axe de rotation (17) du corps de base (2).

4. Dispositif de traitement de canal (1) selon la revendication 3,
**caractérisé en ce que**
l'organe de traitement (3) peut être déplacé autour de l'axe de rotation (17) sur une plage angulaire d'au moins 180°, de préférence d'au moins 270°.

5. Dispositif de traitement de canal (1) selon la revendication 3 ou 4,
**caractérisé en ce que**
l'organe de traitement (3) est relié à l'axe de rotation (17) par au moins un bras de maintien (16) faisant saillie radialement de l'axe de rotation (17).

6. Dispositif de traitement de canal (1) selon la revendication 5,
**caractérisé en ce que**
la longueur du bras de maintien (16) est variable, de préférence réglable.

7. Dispositif de traitement de canal (1) selon l'une des revendications précédentes,
**caractérisé en ce que**
le corps de base (2) comprend deux supports (4a ; 4b) espacés l'un de l'autre et présentant un contour extérieur sensiblement identique, le contour extérieur étant en particulier de forme circulaire ou de forme ovoïde.

8. Dispositif de traitement de canal (1) selon l'une des revendications précédentes,
**caractérisé en ce que**
plusieurs organes d'appui (6a ; 6b ; 7 - 8) sont prévus sur le corps de base (2), en particulier sur les supports (4a ; 4b), pour déplacer et/ou fixer le dispositif de traitement de canal (1) dans le canal (20) à traiter.

9. Dispositif de traitement de canal (1) selon la revendication 7 ou 8,
**caractérisé en ce que**
l'organe de traitement (3) est disposé entre les supports (4a ; 4b) et est monté de manière à pouvoir être déplacé sur les deux côtés opposés dans des guides (10) sur les supports (4a ; 4b).

10. Dispositif de traitement de canal (1) selon l'une des revendications précédentes,
**caractérisé en ce que**
les guides (10) sont conçus comme des rainures et/ou des rails dans le corps de base (2), en particulier dans les supports (4a ; 4b).

11. Dispositif de traitement de canal (1) selon l'une des revendications précédentes,
**caractérisé en ce que**
les guides (10) présentent un tracé correspondant au moins à une partie d'une forme circulaire ou d'une forme ovoïde.

12. Dispositif de traitement de canal (1) selon l'une des revendications précédentes,
**caractérisé en ce que**
l'organe de traitement (3) comprend au moins une tête de traitement, en particulier une tête de perçage et/ou de fraisage.

13. Procédé de traitement d'une face intérieure d'un canal (20),
comprenant les étapes consistant à :
- déplacer un dispositif de traitement de canal (1) à l'intérieur du canal (20) dans la direction longitudinale du canal (20), et, en plus, positionner un organe de traitement (3) en faisant tourner par voie motrice l'organe de traitement (3) autour d'un axe de rotation (17) d'un corps de base (2) du dispositif de traitement de canal (1) au moyen d'au moins un bras de maintien (16) pouvant tourner par voie motrice, bras de maintien (16) qui relie à l'axe de rotation (17) du corps de base l'organe de traitement (3) pourvu de plusieurs plaques de maintien (11a - 11b - 11c) reliées entre elles de manière articulée et montées au moyen de guides (10) sur le corps de base (2) de manière à pouvoir tourner autour de l'axe de rotation (17) du corps de base (2), de sorte que l'organe de traitement (3) du dispositif de traitement de canal (1) est positionné avec les plaques de maintien (11a ; 11b ; 11c) à l'opposé d'un tronçon de canal à traiter,
- presser un organe de maintien avec au moins un couvercle, en particulier un couvercle plat, contre la face intérieure du canal pour monter le couvercle sur le tronçon de canal,
- relier le couvercle à la face intérieure du canal.
